# FASCICULE DE BREVET EUROPEEN

(11) **EP 4 357 888 B1**
(45) Date de publication et mention de la délivrance du brevet: **09.04.2025**
(21) Numéro de dépôt: 23204659.9
(22) Date de dépôt: 19.10.2023
(51) Int. Cl.: G06F 3/01, G06F 16/29, G06F 3/0346

(54) **PROCÉDÉ D'INTERACTION D'UN DISPOSITIF DE POINTAGE ET COMMANDE AVEC UN SYSTÈME DE REPRÉSENTATION EN TROIS DIMENSIONS, ET ENSEMBLE DE REPRÉSENTATION ASSOCIÉ**
VERFAHREN ZUR INTERAKTION EINER ZEIGEVORRICHTUNG UND STEUERUNG MIT EINEM DREIDIMENSIONALEN DARSTELLUNGSSYSTEM UND ABBILDUNGSANORDNUNG DAFÜR
METHOD FOR INTERACTING A POINTING DEVICE AND CONTROL WITH A THREE-DIMENSIONAL REPRESENTATION SYSTEM, AND REPRESENTATION ASSEMBLY THEREFOR

(30) Priorité: 20.10.2022 FR 2210854
(43) Date de publication de la demande: 24.04.2024
(73) Titulaire: THALES, 92190 Meudon (FR)
(72) Inventeur: NEGRET, Jean-Michel, 78140 VELIZY-VILLACOUBLAY (FR)
(74) Mandataire: Lavoix

(56) Documents cités:
- WO-A1-2020/249639
- US-A1- 2020 293 112
- LEITHINGER DANIEL DANIELL@MEDIA MIT EDU ET AL: "Direct and gestural interaction with relief a 2.5D shape display", ACM 2012 CONFERENCE ON COMPUTER SUPPORTED COOPERATIVE WORK COMPANION, CSCW'12, ACM, USA, 16 October 2011 (2011-10-16), pages 541 - 548, XP058600350, ISBN: 978-1-4503-1051-2, DOI: 10.1145/2047196.2047268

## Description

La présente invention concerne un procédé d'interaction entre au moins un dispositif de pointage et commande et un système de représentation d'une zone géographique comprenant un relief.

L'invention concerne en outre un ensemble de représentation comprenant au moins un dispositif de pointage et commande et un système de représentation d'une zone géographique comprenant un relief.

Pour interagir avec des systèmes permettant un affichage d'un flux d'images, comprenant par exemple une carte géographique, il est connu d'implémenter des écrans tactiles. Par exemple, pour un travail collaboratif, de tels écrans peuvent être agencés sous forme d'une table. Une pluralité d'utilisateurs situés autour de la table sont aptes à interagir avec des éléments affichés sur l'écran tactile.

Toutefois, de tels écrans tactiles permettent de manière générale uniquement un affichage en deux dimensions. Par conséquent, une perception tridimensionnelle par exemple d'une carte, d'un modèle d'élévation de terrain ou d'une situation géographique n'est pas obtenue par de tels écrans.

D'autres systèmes d'affichage permettent déjà d'obtenir une vue tridimensionnelle d'une telle carte, par exemple par un affichage spécifique et en utilisant des lunettes 3D, par exemple des lunettes actives ou passives type anaglyphes, des casques immersifs de réalité augmentée ou virtuelle permettant de reproduire la perception de la troisième dimension. Dans l'exemple d'un système de représentation sous forme de table, des utilisateurs situés autour de la table utilisent alors des lunettes 3D pour obtenir une vue tridimensionnelle. Toutefois, l'utilisation de telles lunettes 3D n'est pas toujours aisée pour les utilisateurs. En particulier, d'une part il n'est pas toujours facile de mettre en œuvre un travail collaboratif en utilisant la carte en présence de lunettes 3D, d'autre part les utilisateurs éprouvent souvent une fatigue visuelle à les porter.

US 2020293112 A1 décrit un système d'interaction haptique permettant à un utilisateur d'interagir de manière réaliste avec des objets virtuels. Ce système est constitué d'une unité de visualisation qui affiche des représentations visuelles d'objets virtuels, tels que des surfaces de terrain, et d'une unité de sortie haptique équipée d'éléments mobiles capables de générer des sensations tactiles dynamiques. Les propriétés haptiques de ces objets virtuels, comme la texture ou la rigidité, varient en fonction de la position de l'utilisateur et sont simulées en temps réel par l'unité de sortie haptique.

Un but de l'invention est ainsi d'au moins réduire les inconvénients précités.

En particulier, un but de l'invention est d'obtenir un procédé d'interaction avec un système de représentation d'une zone géographique, qui est particulièrement simple à mettre en oeuvre pour un utilisateur, tout en permettant d'obtenir une perception tridimensionnelle effective de la zone géographique.

A cet effet, l'invention a pour objet un procédé d'interaction entre au moins un dispositif de pointage et commande et un système de représentation d'une zone géographique comprenant un relief, le système de représentation comprenant un support et une pluralité d'éléments mobiles en translation par rapport au support selon une direction d'élévation, chaque élément mobile comprenant une tête présentant au moins une face d'affichage formant une partie dudit relief, le dispositif de pointage et commande étant mobile par rapport au système de représentation, le procédé d'interaction comprenant des étapes suivantes :
- acquisition d'une position de translation de chaque élément mobile,
- réception d'une mesure d'une position et d'une orientation du dispositif de pointage et commande par rapport au système de représentation,
- détermination, en fonction de ladite mesure et de la position de translation de chaque élément mobile, d'une position tridimensionnelle formant une intersection d'une ligne virtuelle s'étendant à partir du dispositif de pointage et commande avec le relief,
- élaboration d'un signal d'affichage en fonction de la position tridimensionnelle pour un affichage d'au moins une image de la zone géographique sur chaque face d'affichage.

En effet, le procédé d'interaction permet d'interagir de manière particulièrement simple avec le système de représentation. En utilisant le dispositif de pointage et commande, une position pointée par le dispositif de pointage et commande sur le relief, à savoir la position tridimensionnelle précise, est déterminée, et le signal d'affichage est déterminé en fonction de cette position.

La position tridimensionnelle est en particulier définie par trois coordonnées sur le relief, selon une direction d'élévation, une direction transversale et une direction longitudinale perpendiculaires l'une par rapport à l'autre.

Ainsi, le procédé d'interaction permet d'interagir avec le système de représentation par l'intermédiaire du dispositif de pointage et commande.

Le fait d'utiliser le dispositif de pointage et commande permet une interaction rapide et efficace avec le système de représentation, par exemple en pointant des positions et/ou objets à partir d'une position d'un utilisateur à distance ou à côté du système de représentation.

Suivant d'autres aspects avantageux de l'invention, le procédé d'interaction comprend une ou plusieurs des caractéristiques suivantes, prise(s) isolément ou suivant toutes les combinaisons techniquement possibles :
- l'étape d'élaboration du signal d'affichage comprend un calcul de déformation d'image pour obtenir ladite image, adaptée à la position de translation de chaque élément mobile, le calcul de déformation d'image comprenant de préférence un traitement par anamorphose ;
- le procédé d'interaction comprend en outre une étape de calcul de la ligne virtuelle, orientée à partir de la position de ladite mesure et selon l'orientation de ladite mesure du dispositif de pointage et commande ;
- l'au moins une image comprend au moins un objet positionné à la position tridimensionnelle sur le relief ;
- le procédé d'interaction comprend en outre une première étape de réception de commande comprenant la réception, de la part du dispositif de pointage et commande, d'une commande d'interaction avec ledit objet à la position tridimensionnelle ;
- la commande d'interaction est au moins un élément de la liste consistant en une modification d'un attribut de l'objet positionné à la position tridimensionnelle, un affichage d'une information de l'objet positionné à la position tridimensionnelle, un marquage de l'objet à la position tridimensionnelle et un déplacement de l'objet sur le relief ;
- le procédé d'interaction comprend en outre une seconde étape de réception de commande comprenant la réception d'une commande d'affichage d'une couche prédéterminée du relief et/ou une commande de marquage de la position tridimensionnelle ;
- le procédé d'interaction comprend en outre une étape de mesure par au moins deux bornes de détection fixes par rapport au système de représentation, de la position et de l'orientation du dispositif de pointage et commande pour obtenir ladite mesure de la position et/ou de l'orientation du dispositif de pointage et commande ;
- les bornes de détection sont des bornes électromagnétiques recevant un signal électromagnétique du dispositif de pointage et commande pour obtenir ladite mesure ;
- le procédé d'interaction comprend en outre une étape d'émission du signal d'affichage à moins un dispositif de vidéo projection, pour l'affichage de ladite image comprise dans le signal d'affichage sur le relief ;
- le procédé d'interaction comprend en outre une étape de programmation de la zone géographique pour obtenir le relief de la zone géographique, l'étape de programmation comprenant au moins l'élaboration d'une commande de déplacement de la pluralité d'éléments mobiles en translation en fonction de données relatives à la zone géographique, et l'émission de la commande de déplacement.

L'invention a aussi pour objet un ensemble de représentation comprenant au moins un dispositif de pointage et commande et un système de représentation d'une zone géographique comprenant un relief, le système de représentation comprenant un support et une pluralité d'éléments mobiles en translation par rapport au support selon une direction d'élévation, chaque élément mobile comprenant une tête présentant au moins une face d'affichage formant une partie dudit relief, le dispositif de pointage et commande étant mobile par rapport au système de représentation, l'ensemble de représentation comprenant en outre un contrôleur configuré pour :
- acquérir une position de translation de chaque élément mobile,
- recevoir une mesure d'une position et d'une orientation du dispositif de pointage et commande par rapport au système de représentation,
- déterminer, en fonction de ladite mesure et de la position de translation de chaque élément mobile, une position tridimensionnelle formant une intersection d'une ligne virtuelle s'étendant à partir du dispositif de pointage et commande avec le relief,
- élaborer un signal d'affichage en fonction de la position tridimensionnelle pour un affichage d'au moins une image de la zone géographique sur chaque face d'affichage.

Ces caractéristiques et avantages de l'invention apparaîtront à la lecture de la description qui va suivre, donnée uniquement à titre d'exemple non limitatif et faite en référence aux dessins annexés, sur lesquels :
- [Fig 1] la figure 1 est une vue schématique en perspective d'un ensemble de représentation comprenant un système de représentation selon l'invention ;
- [Fig 2] la figure 2 est une vue schématique en perspective d'une partie du système de représentation de la figure 1 ;
- [Fig 3] la figure 3 est une représentation schématique en perspective d'une partie du système de représentation de la figure 1 comprenant un dispositif de positionnement ;
- [Fig 4] la figure 4 est une vue schématique d'une partie du dispositif de positionnement de la figure 3 ;
- [Fig 5] La figure 5 est une vue schématique en coupe verticale d'une partie du système de représentation de la figure 1 comprenant plusieurs éléments mobiles, dont un est visible sur la figure 5, et un actuateur configuré pour déplacer cet élément mobile ;
- [Fig 6] la figure 6 est une vue schématique en coupe verticale d'une partie du système de représentation de la figure 1 comprenant un mécanisme électromagnétique configuré pour forcer les éléments mobiles dans une position de repos ;
- [Fig 7] la figure 7 est un ordinogramme d'un procédé d'interaction mis en oeuvre par l'ensemble de la figure 1.

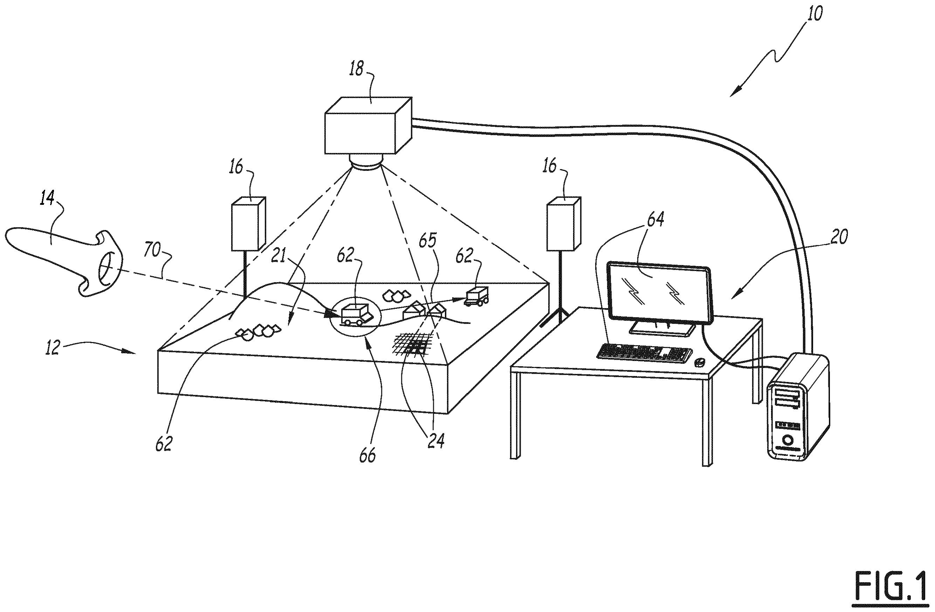

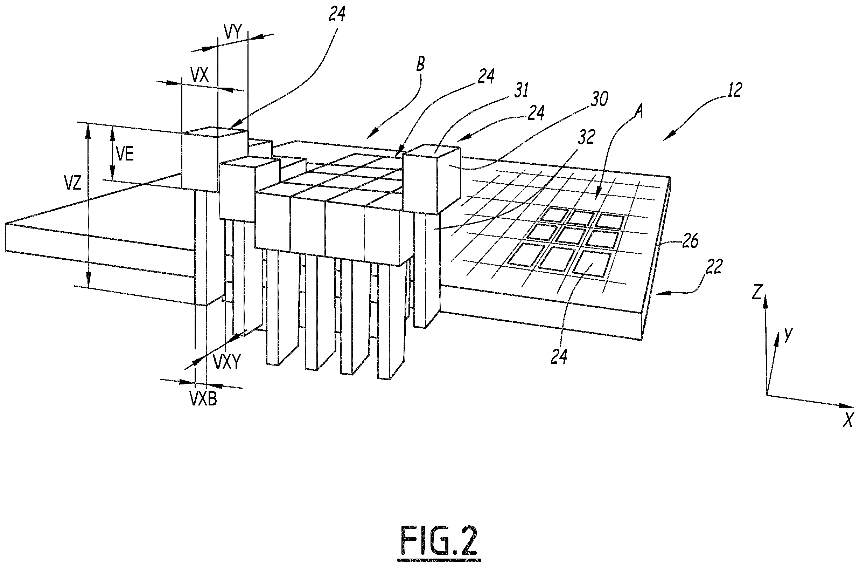

En référence aux figures 1 et 2, un ensemble de représentation 10 comprend un système de représentation 12, au moins un dispositif de pointage et commande 14, par exemple au moins deux bornes de détection 16 de la position et de l'orientation du dispositif de pointage et commande 14, au moins un dispositif de projection 18 et un contrôleur 20.

Le système de représentation 12 est configuré pour représenter une zone géographique 21 comprenant un relief.

La zone géographique est par exemple une carte géographique. Selon un autre exemple, la zone géographique comprend des éléments urbains tels que des bâtiments.

Par « zone géographique comprenant un relief », il est entendu en particulier une zone géographique présentant trois dimensions.

En référence à la figure 2, le système de représentation 12 comprend un support 22 et une pluralité d'éléments mobiles 24, qui sont mobiles en translation par rapport au support 22 selon une direction d'élévation Z.

La direction d'élévation Z s'étend perpendiculairement à une première direction, appelée direction transversale X dans ce qui suit, et une seconde direction, appelée direction longitudinale Y dans ce qui suit. Lorsque la direction transversale X et la direction longitudinale Y sont orientées horizontalement, la direction d'élévation Z est orientée verticalement.

Par exemple, lorsque le support 22 s'étend dans un plan horizontal, chaque élément mobile 24 est mobile en translation verticale par rapport au support 22.

Par exemple, le système de représentation 12 comprend une table formée par le support 22 et des pieds, non représentés, supportant le support 22.

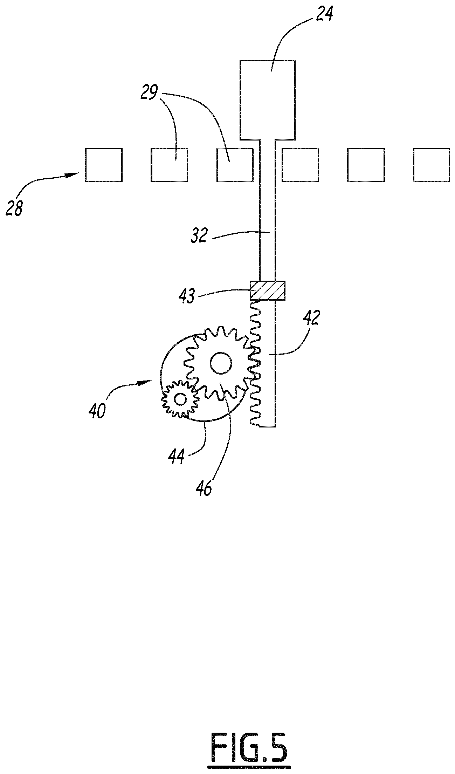

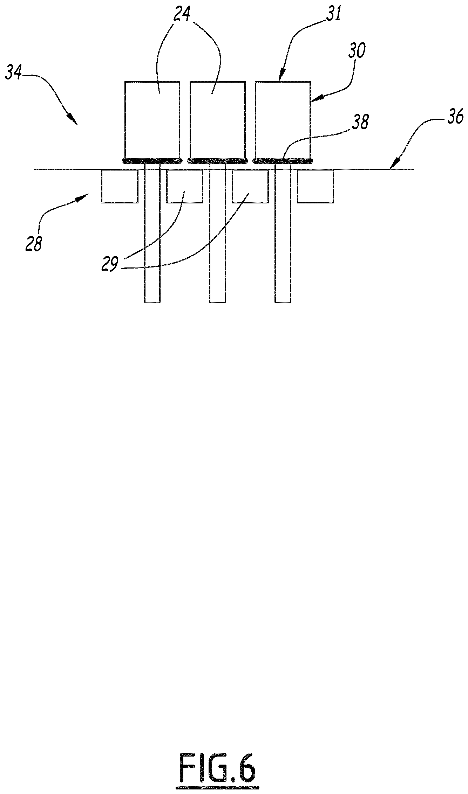

Le support 22 comprend par exemple un cadre 26, dont un exemple est illustré sur la figure 2, et une grille 28, dont un exemple est illustré sur les figures 5 et 6. Le cadre 26 et la grille 28 sont en particulier configurés pour supporter chaque élément mobile 24. Le cadre 26 s'étend de préférence selon la direction transversale X et la direction longitudinale Y. En particulier, la grille 28 s'étend dans un plan perpendiculaire à la direction d'élévation Z. La grille 28 comporte par exemple des poutres 29 s'étendant parallèlement par rapport au cadre 26, notamment selon la direction transversale X et la direction longitudinale Y, de manière à former une grille ayant des poutres disposées perpendiculairement l'une par rapport à l'autre. De préférence, chaque poutre 29 présente une distance identique par rapport à la poutre voisine, de manière à former une grille présentant des ouvertures de taille identique l'une par rapport à l'autre selon la direction d'élévation Z.

Chaque élément mobile 24 forme en particulier un « voxel » (mot composé du mot « vo » de « volume » et « xel » de « pixel », le mot « pixel » étant une contraction des termes anglais « picture » (pour image) et « element » (pour élément)).

En référence à la figure 2, chaque élément mobile 24 comprend une tête 30 présentant au moins une face d'affichage 31, formant une partie du relief de la zone géographique 21. Chaque élément mobile 24 comprend par exemple en outre une tige 32 s'étendant à partir de la tête 30, de préférence selon une direction opposée à la direction d'élévation Z. Par exemple, chaque tige 32 traverse la grille 28.

Selon un exemple, chaque élément mobile 24 présente une hauteur VZ sensiblement égale à 200 mm, dont la tête 30 présente une hauteur VE sensiblement égale à 30 mm. Par exemple, chaque tête 30 présente une même taille. Par exemple, chaque tête présente la face d'affichage 31 formant une partie du relief s'étendant dans un plan perpendiculaire à la direction d'élévation Z. Cette face d'affichage 31 présente par exemple une longueur VY et une largeur VX sensiblement égales à 5 mm.

Selon l'exemple, chaque tige 32 présente, dans un plan perpendiculaire à la direction d'élévation Z, une longueur VYB et une largeur VXB sensiblement égales à 3,5 mm.

Chaque élément mobile 24 est de préférence mobile entre une position de repos, dans laquelle chaque élément mobile 24 est positionné à une même hauteur prédéterminée par rapport au support 22 selon la direction d'élévation Z, et une pluralité de positions de saillie distinctes de la position de repos. Par exemple, dans la position de repos, les éléments mobiles 24 adhèrent au support 22.

Par exemple, en référence à la figure 2, les éléments mobiles 24 situés dans une zone A sont en position de repos et les éléments mobiles 24 positionnés dans une zone B sont en position de saillie.

De préférence, chaque élément mobile 24 est en contact par friction avec au moins un élément mobile voisin 24. En particulier, chaque élément mobile 24 est en contact par au moins une face latérale de la tête 30 avec l'élément mobile voisin 24. De préférence, une force de friction entre deux éléments mobiles voisins 24 est supérieure à une force de pesanteur desdits éléments mobiles 24. Cela permet de maintenir le ou chaque élément mobile 24 en position de saillie.

De préférence, chaque élément mobile 24 est fabriqué par fabrication additive.

De préférence encore, le support 22 est fabriqué par fabrication additive. Par exemple, le cadre 26 et la grille 28 sont fabriqués par fabrication additive, de préférence en une seule pièce.

Par exemple, chaque élément mobile 24 et/ou le support 22 est fait d'une matière plastique, en particulier d'une matière plastique rigide et matte.

De préférence, chaque élément mobile 24 est fait d'un même matériau que le support 22.

En référence à la figure 6, le système de représentation 12 comporte par exemple en outre un mécanisme électromagnétique 34 configuré pour forcer l'ensemble des éléments mobiles 24 dans la position de repos. Le mécanisme électromagnétique 34 et en particulier configuré pour forcer l'ensemble des éléments mobiles 24 dans la position de repos simultanément.

Le mécanisme électromagnétique 34 comprend par exemple un filet métallique 36, par exemple un filet de bobinage de cuivre. Le mécanisme électromagnétique 34 comprend par exemple pour chaque élément mobile 24 une base magnétique 38 fixée à la tête 30 de l'élément mobile 24 correspondant, notamment fixée sur une face de la tête 30 faisant face au filet métallique 36. Lorsque le filet métallique 36 reçoit un courant prédéterminé, il se comporte comme un électroaimant et attire chaque base magnétique 38 des éléments mobiles 24 et amène ainsi les éléments mobiles 24 dans la position de repos.

Le système de représentation 12 comprend en outre au moins un actuateur 40 configuré pour déplacer successivement des différents éléments mobiles 24 de la pluralité d'éléments mobiles selon la direction d'élévation Z. En particulier, l'actuateur 40 est configuré pour déplacer l'un des éléments mobiles 24, puis un autre, respectivement selon la direction d'élévation Z.

Par exemple, l'actuateur 40 est configuré pour recevoir une commande de déplacement pour déplacer l'élément mobile 24 concerné selon la direction d'élévation Z, en fonction de données tridimensionnelles du relief, notamment reçues du contrôleur 20 par une liaison de données.

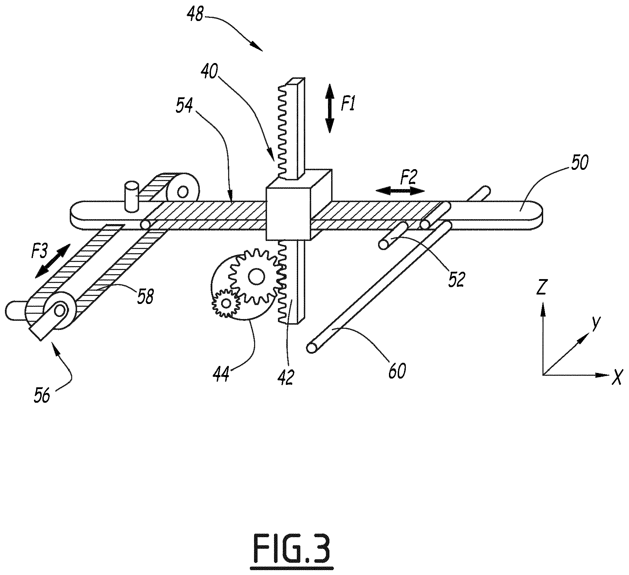

Par exemple, en référence aux figures 3 et 5, l'actuateur 40 comprend une crémaillère 42 configurée pour entrer en contact, optionnellement par l'intermédiaire d'un dispositif d'amortissement 43, avec la tige 32 de l'élément mobile 24 concerné. Le dispositif d'amortissement 43 consiste notamment d'un matériau ayant une dureté plus faible qu'une dureté du matériau de chaque élément mobile 24 et/ou du matériau de la crémaillère 42.

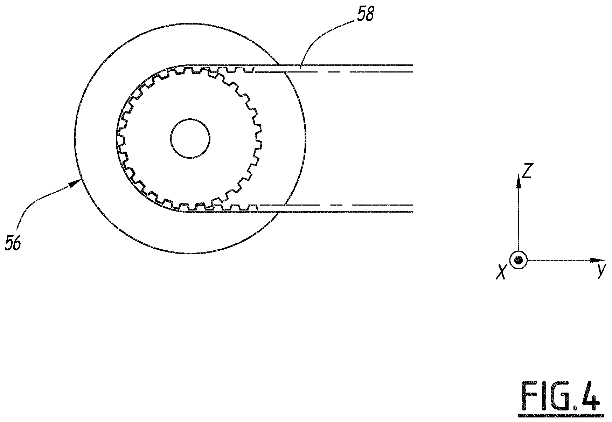

L'actuateur 40 comprend par exemple un moteur d'actuateur 44 comprenant une roue dentée 46. Le moteur d'actuateur 44 est par exemple un moteur électrique. Lorsque le moteur d'actuateur 44 génère une rotation de la roue dentée 46, la crémaillère 42 se déplace en translation, illustré notamment sur la figure 4 par une flèche F1. Lors d'une telle translation, la crémaillère 42 déplace, par contact avec la tige 32, l'élément mobile 24 selon la direction d'élévation Z.

Selon exemple non représenté, l'actuateur 40 est formé par un système pneumatique configuré pour déplacer successivement les différents éléments mobiles 24 de la pluralité d'éléments mobiles selon la direction d'élévation Z.

Le système de représentation 12 comprend en outre un dispositif de positionnement 48 configuré pour positionner l'actuateur 40 par rapport aux éléments mobiles 24 dans un plan de positionnement perpendiculaire à la direction d'élévation Z.

Le plan de positionnement est en particulier défini selon la direction transversale X et la direction longitudinale Y.

Par exemple, le dispositif de positionnement 48 est configuré pour recevoir une commande de positionnement pour positionner l'actuateur 40 dans le plan de positionnement, notamment en fonction des données tridimensionnelles du relief, notamment reçues par une liaison de données adaptée de la part du contrôleur 20.

En référence à la figure 3, le dispositif de positionnement 48 comprend par exemple un bras 50, un premier moteur 52, et une première courroie dentée 54, notamment agencée le long du bras 50. Le bras 50 porte en particulier l'actuateur 40, notamment par l'intermédiaire de la première courroie dentée 54. Le premier moteur 52 est configuré pour déplacer l'actuateur 40 selon la direction transversale X dans le plan de positionnement, en particulier par l'intermédiaire de la première courroie dentée 54. Ce déplacement de la première courroie dentée 54 est par exemple illustré sur la figure 3 par une flèche F2.

Selon un exemple, le dispositif de positionnement 48 comprend en outre un second moteur 56 configuré pour déplacer le bras 50 portant l'actuateur 40 selon la direction longitudinale Y dans le plan de positionnement, en particulier perpendiculairement à la direction transversale X. Dans ce cas, le dispositif de positionnement 48 par exemple une seconde courroie dentée 58 s'étendant selon la direction longitudinale Y.

Par exemple, le second moteur 56 est configuré pour déplacer le bras 50 par l'intermédiaire de la seconde courroie dentée 58. Ce déplacement de la seconde courroie dentée 58 est par exemple illustré sur la figure 3 par une flèche F3.

Selon un exemple, le dispositif de positionnement 48 comprend en outre une barre métallique 60, s'étendant en particulier selon la direction longitudinale Y. En particulier, le bras 50 est porté d'un côté par la seconde courroie dentée 58 et de l'autre côté par la barre métallique 60.

L'actuateur 40 est configuré pour déplacer successivement certains des éléments mobiles 24 parmi la pluralité d'éléments mobiles 24 selon la direction d'élévation Z. En particulier, l'actuateur 40 est configuré pour déplacer l'un des éléments mobiles 24 à une première position de l'actuateur 40 dans le plan de positionnement, puis, après repositionnement de l'actuateur 40 par le dispositif de positionnement 48, un autre des éléments mobiles 24 à une seconde position de l'actuateur 40.

L'actuateur 40 est notamment configuré pour déplacer l'élément mobile 24 à une position donnée par rapport au plan de positionnement par déplacement de la tige 32 par le moteur d'actuateur 44.

En particulier, le dispositif de positionnement 48 est configuré pour déplacer l'actuateur 40 par combinaison des mouvements mis en oeuvre par le premier moteur 52 et le second moteur 56 dans le plan de positionnement par rapport aux éléments mobiles 24, notamment par déplacement du bras 50 et par déplacement de l'actuateur 40 sur ce bras 50.

Selon un exemple non représenté, le système de représentation 12 comprend plusieurs actuateurs 40. Chaque actuateur 40 est de préférence tel que décrit ci-dessus.

De préférence, le système de représentation 12 comprend un nombre d'actuateurs 40 strictement inférieur au nombre d'éléments mobiles 24 du système de représentation 12. Par exemple, le système de représentation 12 comprend un nombre N d'actuateurs, où N est un nombre de puissance de 2, tel que 2, 4, 8, 16, etc. De préférence, dans ce cas, le système de représentation 12 comprend un dispositif de positionnement 48 respectif pour chaque actuateur 40. Chaque dispositif de positionnement 48 est de préférence tel que décrit ci-dessus.

Par exemple, lorsque le système de représentation 12 comprend plusieurs actuateurs 40, chaque actuateur 40 est configuré pour déplacer respectivement les éléments mobiles 24 de manière successive d'une partie prédéfinie de la pluralité d'éléments mobiles 24, par exemple dans une zone prédéfinie du plan de positionnement. Dans ce cas, le dispositif de positionnement 48 respectif est configuré pour déplacer l'actuateur 40 correspondant dans la zone prédéfinie. De préférence, chaque actuateur 40 est inapte à déplacer les éléments mobiles en-dehors de sa zone prédéfinie.

L'ensemble de représentation 10 comprend de préférence plusieurs dispositifs de pointage et commande 14. Le ou chaque dispositif de pointage et commande 14 est mobile par rapport au système de représentation 12.

Le ou chaque dispositif de pointage et commande 14 est configuré pour pointer sur une position tridimensionnelle du relief du système de représentation 12. Par exemple, le ou chaque dispositif de pointage et commande 14 est configuré pour pointer sur une position présentant au moins un objet 62, et est configuré pour interagir avec cet objet 62 sur le relief de la zone géographique 21, par exemple configuré pour détailler ou modifier des attributs de l'objet 62, afficher une couche spécifique, notamment de la carte géographique, sur le relief ou déplacer l'objet 62.

De préférence, le ou chaque dispositif de pointage et commande 14 est un composant COTS (de l'anglais « Commercial Off The Shelf »).

De préférence, le ou chaque dispositif de pointage et commande 14 est configuré pour émettre un signal non optique, en particulier un signal électromagnétique.

Chaque borne de détection 16 est configurée pour mesurer une position et/ou une orientation du dispositif de pointage et commande 14 par rapport au système de représentation 12.

Chaque borne de détection 16 est de préférence une borne électromagnétique configurée pour recevoir un signal électromagnétique du dispositif de pointage et commande 14 pour obtenir ladite mesure. Dans ce cas, le dispositif de pointage et commande 14 est en particulier configuré pour émettre le signal électromagnétique dans une bande de fréquences détectable par chaque borne de détection 16.

De préférence, l'ensemble de représentation 10 comprend un ou plusieurs dispositifs de projection 18, par exemple deux.

Le ou chaque dispositif de projection 18 est également appelé dispositif de vidéo projection.

Le ou chaque dispositif de projection 18 est configuré pour projeter, sur le relief, une série d'images comprenant plusieurs objets 62.

Les objets 62 à représenter sont fixes ou mobiles par rapport au relief.

Les objets 62 sont par exemple modélisés dans le système de représentation 12 par une combinaison d'images numériques projetées (par exemple rendu de forme, couleur, texture, animation rapide) et d'éléments de relief physiques par les éléments mobiles 24 (par exemple rendu 3D, animation lente).

Le contrôleur 20 comprend par exemple, non représenté, un module de réception, un module de traitement, et un module de sortie. De préférence, le module d'entrée, le module de traitement, et le module de sortie sont chacun réalisés au moins partiellement sous forme d'un logiciel, ou d'une brique logicielle, par exemple stocké dans une mémoire du contrôleur 20 et exécutable par un processeur du contrôleur 20.

Le contrôleur 20 comprend par exemple une base de données, non représentée, dans laquelle sont stockées des données relatives à la zone géographique 21, par exemple des données cartographiques lorsque la zone est une carte géographique.

Le contrôleur 20 est par exemple doté d'une interface homme-machine 64 comprenant par exemple un écran, un clavier et/ou une souris.

Dans ce cas, selon un exemple, le contrôleur 20 est configuré pour recevoir les données via l'interface homme-machine 64, notamment des données cartographiques relatives à la carte géographique, en particulier relatives au relief, et/ou relatives aux objets 62.

Le contrôleur 20 est ainsi configuré pour élaborer la commande de déplacement pour l'actuateur 40 et/ou la commande de positionnement pour le dispositif de positionnement 48 à partir des données cartographiques, et configuré pour émettre cette ou ces commande(s).

L'interface homme-machine 64 par exemple est en outre configurée pour afficher la zone géographique 21 et/ou des données relatives à la zone géographique 21 et les objets 62.

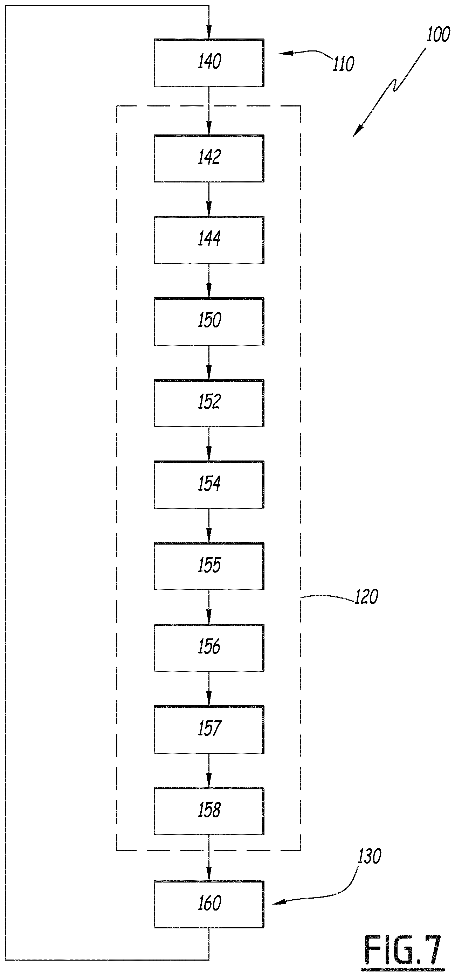

Un procédé d'interaction 100 entre le dispositif de pointage et commande 14 et le système de représentation 12 va maintenant être décrit en référence à la figure 7 comprenant un ordinogramme de ce procédé.

Le procédé d'interaction 100 est au moins partiellement mis en œuvre par le contrôleur 20, c'est-à-dire est au moins partiellement mis en œuvre par ordinateur.

Le procédé d'interaction 100 comprend une phase de mesure 110, une phase de traitement 120, et une phase d'affichage 130.

La phase de mesure 110 comprend au moins une étape de mesure 140 d'une position et d'une orientation du dispositif de pointage et commande 14.

En particulier, lors de l'étape de mesure 140, la ou chaque borne de détection 16, notamment fixe par rapport au système de représentation 12, mesure la position et/ou l'orientation du dispositif de pointage et commande 14. Par exemple, chaque borne de détection 16 échange des données sans fil, de préférence par signal électromagnétique, avec le dispositif de pointage et commande 14 pour obtenir la mesure de la position et/ou de l'orientation de ce dispositif, par exemple selon un protocole d'échange de données prédéterminé, tel qu'un protocole mettant en œuvre un réseau sans fil appelé « Wireless Gigabit (WiGig) », par exemple à une fréquence égale à 60 GHz.

De préférence, l'étape de mesure 140 est mise en œuvre par au moins deux bornes de détection 16, ou trois ou quatre bornes de détection 16.

En particulier, un nombre augmenté de bornes de détection 16 permet de détecter la position et l'orientation de chaque dispositif de pointage et commande 14 situé autour de la table, même en présence d'un utilisateur ou d'un obstacle entre l'une des bornes de détection et le dispositif de pointage et commande 14 correspondant.

Chaque borne de détection 16 transmet un signal comprenant la mesure au contrôleur 20.

La phase de traitement 120 est de préférence mise en œuvre par le contrôleur 20.

La phase de traitement 120 comprend une étape d'acquisition 142, une étape de réception 144, une étape de calcul 150, une étape de détermination 152, une étape d'élaboration 154, une étape d'émission 155, une première étape de réception de commande 156, et une seconde étape de réception de commande 157.

Lors de l'étape d'acquisition 142, le contrôleur 20 acquiert une position de translation de chaque élément mobile 24. Par exemple, le contrôleur 20 reçoit une mesure de la position de translation de la part d'un capteur non représenté.

Selon un autre exemple, le contrôleur 20 obtient chaque position de translation d'une base de données non-représentée. Cette base de données comprend en particulier la position de translation de chaque élément mobile 24 mis à jour comme suite en déplacement récent selon la direction d'élévation Z de cet élément mobile 24.

Selon un autre exemple, le contrôleur 20 obtient chaque position de translation à partir d'un signal de la part du moteur d'actuateur 44.

Par « position de translation », il est entendu la position respective de chaque élément mobile 24 selon la direction d'élévation Z.

Lors de l'étape de réception 144, le contrôleur 20 reçoit la mesure de la position et de l'orientation du ou des dispositif(s) de pointage et commande 14 par rapport au système de représentation 12. En particulier, le contrôleur 20 reçoit le signal comprenant la mesure de la part de la ou des bornes de détection 16, par une liaison de données adaptée.

Lors de l'étape de calcul 150, le contrôleur 20 calcule une ligne virtuelle 70 s'étendant à partir du dispositif de pointage et commande 14.

En particulier, le contrôleur 20 calcule la ligne virtuelle 70 à partir de la position du dispositif de pointage et commande 14 selon la mesure reçue lors de l'étape de réception 144, et à partir de l'orientation du dispositif de pointage et commande 14 selon la mesure reçue lors de l'étape 144.

En particulier, le contrôleur 20 simule un espace tridimensionnel, et calcule dans cet espace la ligne virtuelle 70 en déterminant une équation de droite correspondant à une droite avec la position de la mesure et l'orientation de la mesure.

La ligne virtuelle 70 calculée est ainsi orientée à partir de la position mesurée et selon l'orientation mesurée du dispositif de pointage et commande 14.

L'étape de calcul 150 est une étape optionnelle. Selon un exemple, à la place de l'étape de calcul 150, le contrôleur 20 accède à une base de données pour obtenir une ligne virtuelle pré-calculée en fonction de la position et de l'orientation du dispositif de pointage et commande 14 reçues lors de l'étape de réception 144.

Lors de l'étape de détermination 152, le contrôleur 20 détermine, en fonction de la mesure et de la position de translation de chaque élément mobile 24, une position tridimensionnelle.

La position tridimensionnelle forme une intersection de la ligne virtuelle 70 avec le relief de la zone géographique 21, par exemple avec la tête 30, notamment de la face d'affichage 31, de l'un des éléments mobiles 24.

En particulier, le contrôleur 20 détermine la position tridimensionnelle en fonction de l'élément mobile 24 ou des éléments mobiles 24 qui sont traversés par la ligne virtuelle 70.

Par exemple, le contrôleur 20 simule le relief dans l'espace tridimensionnel, et calcule le point d'intersection de la ligne virtuelle 70 (notamment sous forme d'équation de droite) avec le relief simulé.

Lors de l'étape d'élaboration 154, le contrôleur 20 élabore un signal d'affichage en fonction de la position tridimensionnelle pour un affichage d'au moins une image de la zone géographique 21 sur le relief.

Par exemple, l'image comprise dans le signal d'affichage comprend un marquage de la position tridimensionnelle telle que calculée sur le relief.

Selon un exemple, l'image comprend l'objet 62 positionné à la position tridimensionnelle.

En référence à la figure 1, de préférence, l'image comprend plusieurs objets 62.

Selon la invention, l'étape d'élaboration 154 comprend en outre un calcul de déformation d'image pour obtenir l'image du signal d'affichage, adaptée à la position de translation de chaque élément mobile 24.

En particulier, le contrôleur 20 met en oeuvre un traitement d'anamorphose, de préférence lorsque le fort relief et la déformation de la vidéo projection qui en résulte le justifie.

Par exemple, le calculateur 20 déforme et/ou contracte des parties de l'image pour obtenir, sur le relief, l'affichage de l'image de manière non-déformée. En particulier, le contrôleur 20 compense des aberrations dues à la projection sur le relief, qui est non-plane et non-orthogonale à un axe d'un objectif du dispositif de projection 18 correspondant.

En particulier, le contrôleur 20 met en oeuvre des agrandissements ou contractions d'images en fonction des positions de translation de chaque élément mobile 24, pour obtenir l'image adaptée à la position de translation de chaque élément mobile 24.

Lors de l'étape d'émission 155, le contrôleur 20 émet le signal d'affichage au ou à chaque dispositif de projection 18 pour l'affichage de l'image comprise dans le signal d'affichage sur le relief.

La première étape de réception de commande 156 et/ou la seconde étape de réception de commande 157 comprend/comprennent des modifications ou interactions avec l'objet 62 qui est pointé par le dispositif de pointage et commande 14. Cet objet 62 pointé est positionné à la position tridimensionnelle.

Lors de la première étape de réception 156, le contrôleur 20 reçoit, de la part du dispositif de pointage et commande 14, une commande d'interaction avec l'objet 62 positionné à la position tridimensionnelle, par exemple comme suite à un appui sur un bouton correspondant sur le dispositif de pointage et commande 14 pour envoyer la commande d'interaction au contrôleur 20.

La commande d'interaction est par exemple au moins un élément de la liste consistant en une modification d'un attribut de l'objet 62 positionné à la position tridimensionnelle, un affichage d'une information de l'objet 62 positionné à la position tridimensionnelle, un marquage de l'objet 62 à la position tridimensionnelle, et un déplacement de l'objet 62 sur le relief.

Par exemple, lorsque la commande d'interaction comprend le déplacement de l'objet 62 sur le relief, l'utilisateur utilise le dispositif de pointage et commande 14 pour déplacer l'objet sur le relief de la position tridimensionnelle à une autre position. Cela est illustré sur la figure 1 par une flèche 65.

Lorsque la commande d'interaction comprend une modification d'une donnée de l'objet 62, par exemple un attribut de l'objet est modifié. Par exemple, lorsque l'objet est un véhicule, une capacité de déplacement ou de communication du véhicule est modifiée par la commande d'interaction.

Selon un exemple, le contrôleur 20 incorpore une telle modification dans le signal d'affichage, pour l'affichage de la donnée modifiée de l'objet 62.

Lorsque la commande d'interaction comprend un marquage de l'objet 62 à la position tridimensionnelle, le contrôleur 20 incorpore par exemple dans le signal d'affichage le marquage de l'objet 62, par exemple un changement de la couleur de l'objet 62, pour l'affichage de l'objet dans cette couleur.

Lors de la seconde étape de réception de commande 157, le contrôleur 20 reçoit une commande d'affichage d'une couche prédéterminée du relief, notamment de la part du dispositif de pointage et commande 14.

Selon un autre exemple de la seconde étape de réception de commande 157, ou en complément, cette étape comprend la réception par le contrôleur 20 d'une commande de marquage de la position tridimensionnelle, notamment de la part du dispositif de pointage et commande 14, par exemple comme suite à une saisie du bouton correspondant sur le dispositif de pointage et commande 14.

Par exemple, en référence à la figure 1, la commande de marquage comprend le marquage sous forme d'un cercle 66 autour de la position tridimensionnelle, en particulier autour de l'objet 62.

En particulier le contrôleur 20 incorpore dans le signal d'affichage le marquage correspondant à la commande de marquage pour l'affichage de ce marquage sur le relief.

Selon un exemple, le procédé d'interaction 100 comprend en outre une étape de programmation 158 de la zone géographique 21.

Par exemple, lors de l'étape de programmation 158, le contrôleur 21 reçoit, notamment par l'interface homme-machine 64, des données relatives à la zone géographique 21, telles que les données cartographiques relatives à la carte géographique.

Le contrôleur 20 élabore la commande de déplacement pour l'actuateur 40 et/ou la commande de positionnement pour le dispositif de positionnement 48 à partir des données relatives à la zone géographique 21, et émet cette ou ces commande(s) lors de l'étape de programmation 158, pour obtenir le relief selon les données reçues, formant la zone géographique 21 en trois dimensions.

Par exemple, le dispositif de positionnement 48 met en œuvre le mouvement correspondant à la commande de positionnement en positionnant l'actuateur 40 en-dessous de l'élément mobile 24 correspondant. Selon un exemple, l'actuateur 40 met en œuvre le mouvement correspondant à la commande de déplacement en déplaçant en translation l'élément mobile 24 correspondant.

De préférence, l'étape de programmation 158 est mise en œuvre au moins une fois préalablement à la mise en œuvre de l'étape de mesure 140 ou de l'étape d'acquisition 142.

La phase d'affichage 130 comprend une étape d'affichage 160 par le ou chaque dispositif de projection 18 de l'image comprise dans le signal d'affichage.

De préférence, l'étape d'affichage 160 est mise en œuvre par au moins deux dispositifs de projection 18. Cela permet d'obtenir l'affichage de l'image sur tous les éléments mobiles 24, et en particulier d'éviter un recouvrement de l'une des faces d'affichage 31 de l'élément mobile 24 correspondant par un autre élément mobile 24 en position de saillie, qui est par exemple agencé entre le dispositif de projection 18 et la face d'affichage 31 correspondante.

Le procédé d'interaction 100 est de préférence mis en œuvre plusieurs fois. De préférence, la phase de mesure 110, la phase de traitement 120, et la phase d'affichage 130 sont mises en œuvre successivement l'une après l'autre.

De préférence, chaque phase 110, 120,130 est mise en œuvre plusieurs fois.

Par exemple, au moins les étapes d'acquisition 142, de réception 144, de détermination 152, et d'élaboration 154 sont mises en œuvre au moins une fois comme suite à une mise en œuvre de l'étape de programmation 158.

Selon un exemple, la phase de mesure 110, la phase de traitement 120, et la phase d'affichage 130 sont mises en œuvre simultanément ou en parallèle.

La phase de mesure 110 est optionnelle. En variante, le contrôleur 20 reçoit la mesure de la position et l'orientation sous forme d'une mesure simulée, par exemple à partir d'une base de données.

L'étape de calcul 150, l'étape d'émission 155, la première étape de réception de commande 156, la seconde étape de réception de commande 157 et/ou l'étape d'affichage 160 est/sont une/des étape(s) optionnelle(s).

Bien entendu, d'autres modes de réalisation peuvent être envisagés.

Par exemple, le procédé 100 est mis en oeuvre par plusieurs dispositifs de commande 14.

Par exemple, le procédé d'interaction 100 comprend la réception de la commande de déplacement des éléments mobiles 24 en provenance du dispositif de pointage et commande 14 au lieu d'une saisie par l'interface homme-machine 64. Dans ce cas, par exemple, le dispositif de pointage et commande 14 envoie une commande adaptée au contrôleur 20, et le contrôleur 20 calcule un signal correspondant pour l'actuateur 40 correspondant et/ou pour le dispositif de projection 18.

On conçoit que le procédé d'interaction 100 est particulièrement simple à mettre en oeuvre pour un utilisateur, tout en permettant d'obtenir une perception tridimensionnelle effective de la zone géographique 21.

Par exemple, si la position pointée, à savoir la position tridimensionnelle, contient la représentation d'un objet donné 62, et l'utilisateur envoie une commande pour obtenir des détails de cet objet 62, le signal affiché contient le nom de l'objet 62 et ses attributs. Selon un autre exemple, lors d'une modification du relief par une translation des éléments mobiles 24 selon la direction d'élévation Z, la position pointée par le dispositif de pointage et commande 14 est adaptée.

## Revendications

1. Procédé d'interaction (100) entre au moins un dispositif de pointage et commande (14) et un système de représentation (12) d'une zone géographique (21) comprenant un relief, le système de représentation (12) comprenant un support (22) et une pluralité d'éléments mobiles (24) en translation par rapport au support (22) selon une direction d'élévation (Z), chaque élément mobile (24) comprenant une tête (30) présentant au moins une face d'affichage (31) formant une partie dudit relief, le dispositif de pointage et commande (14) étant mobile par rapport au système de représentation (12), le procédé d'interaction (100) comprenant des étapes suivantes :
- acquisition (142) d'une position de translation de chaque élément mobile (24),
- réception (144) d'une mesure d'une position et d'une orientation du dispositif de pointage et commande (14) par rapport au système de représentation (12),
- détermination (152), en fonction de ladite mesure et de la position de translation de chaque élément mobile (24), d'une position tridimensionnelle formant une intersection d'une ligne virtuelle (70) s'étendant à partir du dispositif de pointage et commande (14) avec le relief,
- élaboration (154) d'un signal d'affichage en fonction de la position tridimensionnelle pour un affichage d'au moins une image de la zone géographique (21) sur chaque face d'affichage (31),
l'étape d'élaboration (154) du signal d'affichage comprenant un calcul de déformation d'image pour obtenir ladite image, adaptée à la position de translation de chaque élément mobile (24), le calcul de déformation d'image comprenant de préférence un traitement par anamorphose.

2. Procédé d'interaction (100) selon la revendication 1, comprenant en outre une étape de calcul (150) de la ligne virtuelle (70), orientée à partir de la position de ladite mesure et selon l'orientation de ladite mesure du dispositif de pointage et commande (14).

3. Procédé d'interaction (100) selon l'une quelconque des revendications précédentes, dans lequel l'au moins une image comprend au moins un objet (62) positionné à la position tridimensionnelle sur le relief.

4. Procédé d'interaction (100) selon la revendication 3, comprenant en outre une première étape de réception de commande (156) comprenant la réception, de la part du dispositif de pointage et commande (14), d'une commande d'interaction avec ledit objet (62) à la position tridimensionnelle.

5. Procédé d'interaction (100) selon la revendication 4, dans lequel la commande d'interaction est au moins un élément de la liste consistant en une modification d'un attribut de l'objet (62) positionné à la position tridimensionnelle, un affichage d'une information de l'objet (62) positionné à la position tridimensionnelle, un marquage de l'objet (62) à la position tridimensionnelle et un déplacement de l'objet (62) sur le relief.

6. Procédé d'interaction (100) selon l'une quelconque des revendications précédentes, comprenant en outre une seconde étape de réception de commande (157) comprenant la réception d'une commande d'affichage d'une couche prédéterminée du relief et/ou une commande de marquage de la position tridimensionnelle.

7. Procédé d'interaction (100) selon l'une quelconque des revendications précédentes, comprenant en outre une étape de mesure (140) par au moins deux bornes de détection (16) fixes par rapport au système de représentation (12), de la position et de l'orientation du dispositif de pointage et commande (14) pour obtenir ladite mesure de la position et/ou de l'orientation du dispositif de pointage et commande (14),
les bornes de détection (16) étant de préférence des bornes électromagnétiques recevant un signal électromagnétique du dispositif de pointage et commande (14) pour obtenir ladite mesure.

8. Procédé d'interaction (100) selon l'une quelconque des revendications précédentes, comprenant en outre une étape d'émission (155) du signal d'affichage à moins un dispositif de vidéo projection (18), pour l'affichage de ladite image comprise dans le signal d'affichage sur le relief.

9. Procédé d'interaction (100) selon l'une quelconque des revendications précédentes, comprenant en outre une étape de programmation (158) de la zone géographique (21) pour obtenir le relief de la zone géographique (21), l'étape de programmation (158) comprenant au moins l'élaboration d'une commande de déplacement de la pluralité d'éléments mobiles (24) en translation en fonction de données relatives à la zone géographique (21), et l'émission de la commande de déplacement.

10. Ensemble de représentation (10) comprenant au moins un dispositif de pointage et commande (14) et un système de représentation (12) d'une zone géographique (21) comprenant un relief, le système de représentation (12) comprenant un support (22) et une pluralité d'éléments mobiles (24) en translation par rapport au support (22) selon une direction d'élévation (Z), chaque élément mobile (24) comprenant une tête (30) présentant au moins une face d'affichage (31) formant une partie dudit relief, le dispositif de pointage et commande (14) étant mobile par rapport au système de représentation (12), l'ensemble de représentation (10) comprenant en outre un contrôleur (20) configuré pour :
- acquérir une position de translation de chaque élément mobile (24),
- recevoir une mesure d'une position et d'une orientation du dispositif de pointage et commande (14) par rapport au système de représentation (12),
- déterminer, en fonction de ladite mesure et de la position de translation de chaque élément mobile (24), une position tridimensionnelle formant une intersection d'une ligne virtuelle (70) s'étendant à partir du dispositif de pointage et commande (14) avec le relief,
- élaborer un signal d'affichage en fonction de la position tridimensionnelle pour un affichage d'au moins une image de la zone géographique (21) sur chaque face d'affichage (31), une élaboration du signal d'affichage comprenant un calcul de déformation d'image pour obtenir ladite image, adaptée à la position de translation de chaque élément mobile (24), le calcul de déformation d'image comprenant de préférence un traitement par anamorphose.

## Patentansprüche

1. Verfahren zur Interaktion (100) zwischen mindestens einer Zeigevorrichtung und Steuerung (14) und einem Darstellungssystem (12) eines geographischen Bereichs (21), umfassend ein Relief, wobei das Darstellungssystem (12) einen Träger (22) und eine Vielzahl von beweglichen Elementen (24) in Translation mit Bezug auf den Träger (22) in einer Heberichtung (Z) umfasst, wobei jedes bewegliche Element (24) einen Kopf (30) umfasst, der mindestens eine Anzeigeseite (31) darstellt, die einen Teil des Reliefs bildet, wobei die Zeigevorrichtung (14) und Steuerung mit Bezug auf das Darstellungssystem (12) beweglich ist, wobei das Verfahren zur Interaktion (100) die folgenden Schritte umfasst;
- Erfassen (142) einer Translationsposition jedes beweglichen Elements (24),
- Empfangen (144) einer Messung einer Position einer Ausrichtung der Zeigevorrichtung (14) und Steuerung (14) mit Bezug auf das Darstellungssystem (12),
- Bestimmen (152), in Funktion der Messung und der Translationsposition jedes beweglichen Elements (24), einer dreidimensionalen Position, die eine Schnittstelle einer virtuellen Linie (70) bildet, die sich von der Zeigevorrichtung und Steuerung (14) mit dem Relief erstreckt,
- Erstellen (154) eines Anzeigesignals in Funktion der dreidimensionalen Position für eine Anzeige mindestens eines Bildes des geografischen Bereichs (21) auf jeder Anzeigeseite (31),
wobei der Schritt (154) des Erstellens des Anzeigesignals eine Berechnung der Verformung des Bildes umfasst, um das Bild zu erhalten, angepasst an die Translationsposition jedes beweglichen Elements (24), wobei die Berechnung der Verformung des Bildes vorzugsweise eine Behandlung durch Anamorphose umfasst.

2. Verfahren zur Interaktion (100) nach Anspruch 1, umfassend außerdem einen Schritt des Berechnens (150) der virtuellen Linie (70), die von der Position der Messung und gemäß der Ausrichtung der Messung der Zeigevorrichtung und Steuerung (14) ausgerichtet ist.

3. Verfahren zur Interaktion (100) nach einem der vorhergehenden Ansprüche, **dadurch gekennzeichnet, dass** das mindestens eine Bild mindestens einen Gegenstand (62) umfasst, der an der dreidimensionalen Position auf dem Relief positioniert ist.

4. Verfahren zur Interaktion (100) nach Anspruch 3, umfassend außerdem einen ersten Schritt des Empfangens der Steuerung (156), umfassend den Empfang, seitens der Zeigevorrichtung und Steuerung (14), einer Steuerung zur Interaktion mit dem Gegenstand (62) mit der dreidimensionalen Position.

5. Verfahren zur Interaktion (100) nach Anspruch 4, wobei die Steuerung zur Interaktion mindestens ein Element der Liste ist, bestehend aus einer Modifizierung eines Attributs des Gegenstands (62), der an der dreidimensionalen Position positioniert ist, einer Anzeige einer Information des Gegenstands (62), die an der dreidimensionalen Position positioniert ist, einer Kennzeichnung des Gegenstands (62) an der dreidimensionalen Position und eine Verschiebung des Gegenstands (62) auf dem Relief.

6. Verfahren zur Interaktion (100) nach einem der vorhergehenden Ansprüche, umfassend außerdem einen zweiten Schritt des Empfangens der Steuerung (157), umfassend den Empfang einer Steuerung der Anzeige einer vorbestimmten Schicht des Reliefs und/oder einer Steuerung der Markierung der dreidimensionalen Position.

7. Verfahren zur Interaktion (100) nach einem der vorhergehenden Ansprüche, umfassend außerdem einen Schritt des Messens (140) durch mindestens zwei Nachweisklemmen (16), die mit Bezug auf das Darstellungssystem (12) fixiert sind, der Position und der Ausrichtung der Zeigevorrichtung und Steuerung (14), um die Messung der Position und/oder der Ausrichtung der Zeigevorrichtung und Steuerung (14) zu erhalten,
wobei die Nachweisklemmen (16) vorzugsweise elektromagnetische Klemmen sind, die ein elektromagnetisches Signal der Zeigevorrichtung und Steuerung (14) empfangen, um die Messung zu erhalten.

8. Verfahren zur Interaktion (100) nach einem der vorhergehenden Ansprüche, umfassend außerdem einen Schritt des Emittierens (155) des Anzeigesignals mit Hilfe einer Videoprojektionsvorrichtung (18) für die Anzeige des Bildes, das im dem Anzeigesignal auf dem Relief enthalten ist.

9. Verfahren zur Interaktion (100) nach einem der vorhergehenden Ansprüche, umfassend außerdem einen Schritt des Programmierens (158) des geografischen Bereichs (21), um das Relief des geografischen Bereichs (21) zu erhalten, wobei der Schritt des Programmierens (158) mindestens das Erstellen einer Steuerung zur Verschiebung der Vielzahl von beweglichen Elementen (24) in Translation in Funktion der Daten bezüglich des geografischen Bereichs (21) und der Emission der Steuerung zur Verschiebung umfasst.

10. Darstellungseinheit (10), umfassend mindestens einer Zeigevorrichtung und Steuerung (14) und ein Darstellungssystem (12) eines geographischen Bereichs (21), umfassend ein Relief, wobei das Darstellungssystem (12) einen Träger (22) und eine Vielzahl von beweglichen Elementen (24) in Translation mit Bezug auf den Träger (22) in einer Heberichtung (Z) umfasst, wobei jedes bewegliche Element (24) einen Kopf (30) umfasst, der mindestens eine Anzeigeseite (31) darstellt, die einen Teil des Reliefs bildet, wobei die Zeigevorrichtung und Steuerung (14) mit Bezug auf das Darstellungssystem (12) beweglich ist, wobei die Darstellungseinheit (10) außerdem eine Steuervorrichtung (20) umfasst, die konfiguriert ist, um:
- eine Translationsposition jedes beweglichen Elements (24) zu erfassen
- eine Messung einer Position und einer Ausrichtung der Zeigevorrichtung und Steuerung (14) mit Bezug auf das Darstellungssystem (12) zu empfangen,
- abhängig von der Messung und der Translationsposition jedes beweglichen Elements (24) eine dreidimensionale Position zu bestimmen, die eine Schnittstelle einer virtuellen Linie (70) bildet, die sich von der Zeigevorrichtung und Steuerung (14) mit dem Relief erstreckt,
- ein Anzeigesignal in Funktion der dreidimensionalen Position für eine Anzeige mindestens eines Bildes des geografischen Bereichs (21) auf jeder Anzeigeseite (31) zu erstellen, wobei ein Erstellen des Anzeigesignals eine Berechnung der Verformung des Bildes umfasst, um das Bild zu erhalten, angepasst an die Translationsposition jedes beweglichen Elements (24), wobei die Berechnung der Verformung des Bildes vorzugsweise eine Behandlung durch Anamorphose umfasst.

## Claims

1. A method of interaction (100) between at least one pointing and control device (14) and a system of representation (12) of a geographical area (21) comprising a terrain, the system of representation (12) comprising a support (22) and a plurality of elements (24) movable in translation with respect to the support (22) along a direction of elevation (Z), each movable element (24) comprising a head (30) having at least one display face (31) forming a part of said terrain, the pointing and control device (14) being movable with respect to the system of representation (12), the interaction method (100) comprising the following steps:
- acquisition (142) of a translational position of each movable element (24),
- reception (144) of a measurement of a position and of an orientation of the pointing and control device (14) with respect to the system of representation (12),
- determination (152), depending on said measurement and of the translational position of each movable element (24), of a three-dimensional position forming an intersection between a virtual line (70) extending from the pointing and control device (14), and the terrain,
- development (154) of a display signal according to the three-dimensional position for a display of at least one image of the geographical area (21) on each display (31),
the step of developing (154) the display signal comprising a computation of image deformation in order to obtain said image, adapted to the translation position of each movable element (24), the computation of image deformation preferentially comprising an anamorphosis processing.

2. The interaction method (100) according to claim 1 or claim 2, further comprising a step of computing (150) the virtual line (70) oriented from the position of said measurement and according to the orientation of said measurement of the pointing and control device (14).

3. The interaction method (100) according to any of the preceding claims, wherein the at least one image comprises at least one object (62) positioned at the three-dimensional position on the terrain.

4. The interaction method (100) according to claim 3, further comprising a first command reception step (156) comprising the reception, from the pointing and control device (14), of a command to interact with said object (62) at the three-dimensional position.

5. The interaction method (100) according to claim 4, wherein the interaction command is at least one element of the list consisting of a modification of an attribute of the object (62) positioned at the three-dimensional position, a display of a piece of information of the object (62) positioned at the three-dimensional position, a marking of the object (62) at the three-dimensional position and a displacement of the object (62) on the terrain.

6. The interaction method (100) according to any of the preceding claims, further comprising a second command reception step (157) comprising the reception of a command to display a predetermined layer of the terrain and/or a command to mark the three-dimensional position.

7. The interaction method (100) according to any of the preceding claims, further comprising a step of measuring (140), by at least two detection terminals (16) stationary with respect to the system of representation (12), the position and orientation of the pointing and control device (14), so as to obtain said measurement of the position and/or orientation of the pointing and control device (14),
the detection terminals (16) being preferentially electromagnetic terminals receiving an electromagnetic signal from the pointing and control device (14), in order to obtain said measurement.

8. The interaction method (100) according to any of the preceding claims, further comprising a step of transmitting (155) the display signal to at least one video projection device (18), for displaying on the terrain, said image comprised in the display signal.

9. The interaction method (100) according to any of the preceding claims, further comprising a step of programming (158) the geographical area (21) in order to obtain the terrain of the geographical area (21), the programming step (158) comprising at least the development of displacement command to displace the plurality of movable elements (24) according to data relating to the geographical area (21), and the transmission of the displacement command.

10. A representation assembly (10) comprising at least one pointing and control device (14) and a system of representation (12) of a geographical area (21) comprising a terrain, the system of representation (12) comprising a support (22) and a plurality of elements (24) movable in translation with respect to the support (22) along a direction of elevation (Z), each movable element (24) comprising a head (30) having at least one display face (31) forming a part of said terrain, the pointing and control device (14) being movable with respect to the system of representation (12), the representation assembly (10) further comprising a controller (20) configured for:
- acquiring a translational position of each movable component (24),
- receiving a measurement of a position and an orientation of the pointing and control device (14) with respect to the system of representation (12),
- determining, according to said measurement and of the translational position of each movable element (24), a three-dimensional position forming an intersection between a virtual line (70) extending from the pointing and control device (14), and the relief,
- developing a display signal according to the three-dimensional position for a display of at least one image of the geographical area (21) on each display face (31),
the step of developing the display signal comprising a computation of image deformation in order to obtain said image, adapted to the translation position of each movable element (24), the computation of image deformation preferentially comprising an anamorphosis processing.
